# EUROPEAN PATENT SPECIFICATION

(11) **EP 0 801 105 B1**
(45) Date of publication and mention of the grant of the patent: **28.01.2004**
(21) Application number: 97302441.7
(22) Date of filing: 09.04.1997
(51) Int. Cl.: C08L 23/16, C08L 53/02, C08L 25/10

(54) **Resin composition and moldings**
Harzzusammensetzung und Formmassen daraus
Composition à base de résine et masses à mouler à partir de cette composition

(30) Priority: 11.04.1996 JP 8932696
(43) Date of publication of application: 15.10.1997
(73) Proprietor: IDEMITSU PETROCHEMICAL CO., LTD., Minato-ku, Tokyo (JP)
(72) Inventor: Ubara, Atsuhiko, c/o Idemitsu Petrochem. Co., Ltd., Himeji-shi, Hyogo-ken (JP)
(74) Representative: Hucker, Charlotte Jane

(56) References cited:
- US-A- 4 257 934
- US-A- 4 578 413
- US-A- 4 942 202

## Description

### BACKGROUND OF THE INVENTION

### 1. FIELD OF THE INVENTION

This invention relates to a resin composition containing elastomer and moldings of a sheet or the like.

### 2. DESCRIPTION OF THE RELATED ART

Conventionally, a component molded to contain, for example, polyvinyl chloride as materials is used for door trims of vehicles, console-boxes, steering wheel grips of a vehicles and so on. Rubber undergoing a cross-linking treatment with vulcanization is used for golf clubs and grips of ski poles. Since most of them consist of a single component material, the feel, when touched by a hand wet with perspiration or the like, sometimes differs from that of a dry hand. Depending upon the feel changed as described above, the feel characteristic of resin is felt on the dry hand.

Further, environmental issues, effected by chlorine in polyvinyl chloride which is produced in a waste treatment of spend resin moldings, have been presented and measure against the environmental issues are demanded. As an alternative to polyvinyl chloride, the use of a resin thermoplastic elastomer (TPE) is suggested, and predominatedly, the use of an olefin thermoplastic elastomer (TPO).

The feel of a product consisting of TPO element includes a feeling of stickiness or a feeling of slide. As a remedy against this, an attempt has been made to improve the feel by including an inorganic filler such as talc powder. The feelings of stickiness and slide, however, are not resolved sufficiently, if anything, a decrease in durability against friction is caused by the inorganic filler.

Moldings blending resin materials with silicone is also proposed (see Japanese Patent Application Laid-open No. Sho 58-142925 and the like). According to the aforementioned moldings, however, durability against friction is protected but the feelings of stickiness and slide are not extensively improved.

US-A-4942202 discloses a rubber composition prepared by reacting an organic peroxide with 3 to 70 parts by weight of silicone rubber and 30 to 97 parts by weight of a saturated elastomer. The rubber composition may include a variety of functional additives, and Example 10 describes a rubber composition containing Carnauba wax.

US-A-4578413 discloses a rubber composition comprising a thermoplastic elastomeric block copolymer comprising blocks of styrene-ethylene-butylene-styrene and a polysiloxane in an amount of 0.1 to 12 weight percent of the total rubber composition. The compositions are useful as polymeric tubing, particularly for medical use.

US-A-4257934 discloses a rubber composition comprising a blend of EPDM rubber, styrene-butadiene rubber and styrene-butadiene resin and 1 to 20 weight percent of a tackifying resin, such as coal tar resin, petroleum resin, polyterpene resin and aromatic resin.

US-A-4521479 discloses a method for reducing the surface tack of EPDM and related elastomers, comprising coating the surfaces of the elastomer with cellulose.

### SUMMARY OF THE INVENTION

A resin composition according to the present invention is characterised by including: a thermoplastic elastomer; a natural organic material; and a silicone, characterised in that the natural organic material is selected from silk, cellulose, collagen, wool, keratin, hemp, cotton, chitin, chitosan, betain, egg shell membrane and mixtures thereof.

As the thermoplastic elastomer, an olefin thermoplastic elastomer can be used.

An ethylene-propylene copolymer, an ethylene-propylene-diene copolymer and so on can be named as concrete examples of the olefin thermoplastic elastomer.

Further as the thermoplastic elastomer, a styrene thermoplastic elastomer can be also used.

A styrene-butadiene copolymer, a styrene-ethylene-butadiene copolymer and so on can be named as concrete examples of the styrene thermoplastic elastomer.

It is advisable that the content the natural organic material is 5 wt% to 30 wt%. If the natural organic material is present in an amount of less than 5 wt%, an excellent feel, durability against friction and moisture inhalation-exhalation cannot be obtained. If the natural organic material is present in an amount of more than 30 wt%, the softness of the resin is damaged.

The natural organic material is in fine powder state having a particular size of less than 300µm. An excellent feel is hard to obtain with a particle size of more than 300µm.

The content of the silicone is 0.3 wt% to 10 wt%, more preferably, 0.5 wt% to 8%. A silicone content of less than 0.3 wt% is insufficient for improving durability against friction. A silicone content of more than 10 wt% allows mold-processability to decrease markedly.

Incidentally, additives, such as a dispersing agent, a stabilizing agent, lubricant or the like, may be added into the resin composition.

Moldings according to the present invention are formed by using the aforementioned resin composition.

Types of the moldings are selected, for example, sheet-shaped moldings, bottle-shaped moldings, and so on.

The sheet-shaped moldings can be obtained with a calender molding method, an extrusion molding method, or the like by using the aforementioned resin composition. Complicatedly shaped moldings (including moldings of a multilayered structure) can be obtained with an injection molding method.

The bottle-shaped moldings can be obtained with a blow molding method by using the aforementioned resin composition.

Since the moldings according to the present invention are molded by using the aforementioned resin composition, the moldings have excellent moisture inhalation-exhalation, friction and touch-feeling, and furthermore, have suitable hardness.

### DETAILED DESCRIPTION OF THE PREFERRED EMBODIMENT(S)

A resin composition relating to the preferred embodiment contains an olefin thermoplastic elastomer, 5-30 wt% fine powder of a natural organic material, and 0.3-10 wt% silicone, and further includes a required additive. A styrene thermoplastic elastomer instead of the olefin thermoplastic elastomer can be used.

Moldings relating to the preferred embodiment are moldings which the resin composition is formed to be a sheet with an extrusion molding method or the like.

### Experiment 1

In the aforementioned embodiment, the resin composition is defined as follows:

90% by weight of an olefin thermoplastic elastomer [TPE3572 (a trade name) made by Sumitomo Kagaku Co., Ltd.], 10% by weight of protein fine powder [PROTEIN K-SF (a trade name) made by Idemitsu Petrochemical Co., Ltd.], and 2% by weight of silicone [SILICONE RUBBER SE6794U (a trade name) made by TORAY-DOWCORNING SILICONE CO., LTD.].

As molding according to the embodiment, a sheet of thickness 300 µm is obtained from the resin composition molten and kneaded with apparatus (made by Nishimura Kougyou Co., Ltd.), having two rollers.

### Experiment 2

The same resin composition and sheet as Experiment 1 is obtained, but the content of each component is changed. It is 80% by weight of the olefin thermoplastic elastomer, 20% by weight of the natural organic fine powder, and 2% by weight of silicone.

### Experiment 3

The same resin composition and sheet as Experiment 1 is obtained, but the content of each component is changed. It is 80% by weight of the olefin thermoplastic elastomer, 20% by weight of the natural organic fine powder, and 0.3phr of silicone.

### Experiment 4

The same resin composition and sheet as Experiment 1 is obtained, but the content of each component is changed. It is 80% by weight of the olefin thermoplastic elastomer, 20% by weight of the natural organic fine powder, and 0.6% by weight of silicone.

### Experiment 5

The same resin composition and sheet as Experiment 1 is obtained, but the content of each component is changed. It is 80% by weight of the olefin thermoplastic elastomer, 20% by weight of the natural organic fine powder, and 1.5% by weight of silicone.

### Experiment 6

The same resin composition and sheet as Experiment 1 is obtained with the use of the styrene thermoplastic elastomer [SEBS (a trade name) made by Sumitomo Bakelite Co., Ltd.] instead of the olefin thermoplastic elastomer used in Experiment 1.

It is 90% by weight of the styrene thermoplastic elastomer, 10% by weight of the natural organic fine powder, and 2% by weight of silicone.

### Experiment 7

The same resin composition and sheet as Experiment 6 is obtained, but the content of each component is changed. It is 80% by weight of the styrene thermoplastic elastomer, 20% by weight of the natural organic fine powder, and 2% by weight of silicone.

### Experiment 8

The same resin composition and sheet as Experiment 1 is obtained with the use of cellulose fine powder [L-SF (a trade name) made by Idemitsu Petrochemical Co., Ltd.] instead of protein fine powder used in Experiment 1.

It is 80% by weight of the styrene thermoplastic elastomer, 10% by weight of the natural organic fine powder, and 2% by weight of silicone.

### Comparison 1

100% by weight of an olefin thermoplastic elastomer element instead of the resin composition used in Experiment 1 is used.

### Comparison 2

A resin composition of Comparison 2 consists of 100% by weight of the olefin thermoplastic elastomer, relating to Experiment 1, and 2% by weight of silicone.

### Comparison 3

A resin composition of Comparison 3 consists of 90% by weight of the olefin thermoplastic elastomer, relating to Experiment 1, and 10% by weight of protein fine powder.

### Comparison 4

A resin composition of Comparison 4 consists of 80% by weight of the olefin thermoplastic elastomer, relating to Experiment 1, and 20% by weight of protein fine powder.

### Comparison 5

A resin composition of Comparison 5 consists of 80% by weight of the olefin thermoplastic elastomer, relating to Experiment 1, 20% by weight of calcium carbonate [KS-2100 (a trade name) made by Dowa Karufine Co., Ltd.], and 2% by weight of silicone.

### Comparison 6

A resin composition of Comparison 6 consists of 80% by weight of the olefin thermoplastic elastomer, relating to Experiment 1, 10phr of talc [JA-46R (a trade name) made by Asada Seifun Co., Ltd.], and 2phr of silicone.

### Comparison 7

100% by weight of a styrene thermoplastic elastomer element instead of the resin composition used in Experiment 6.

### Comparison 8

A resin composition of Comparison 8 consists of 90% by weight of the styrene thermoplastic elastomer, relating to Experiment 6, and 10% by weight of the protein fine powder.

### Comparison 9

A resin composition of Comparison 9 consists of 90% by weight of a styrene thermoplastic elastomer, relating to Experiment 6, and 20% by weight of the protein fine powder.

### Comparison 10

A resin composition of Comparison 10 consists of 100% by weight of the styrene thermoplastic elastomer, relating to Experiment 6, and 2% by weight of silicone.

### Comparison 11

A resin composition of Comparison 11 consists of 90% by weight of the styrene thermoplastic elastomer, relating to Experiment 6, 10% by weight of calcium carbonate, and 2% by weight of silicone.

### Evaluation of Property

The sheets obtained in Experiments 1-8 are evaluated in regard to moisture inhalation-exhalation, friction, hardness, and touch-feeling (feel). The following Table 1 provides the results of evaluations. In Table 1, TPO is the olefin thermoplastic elastomer and TPS is the styrene thermoplastic elastomer.

Moisture inhalation of the aforementioned moisture inhalation-exhalation is evaluated by measuring the weight-change par unit volume after the sheet is placed in an atmosphere with the relative humidity 80% and a temperature 23 °C for four hours to absorb moisture. Moisture exhalation is evaluated by measuring the weight-change par unit volume after the sheet, absorbed moisture above, is placed in an atmosphere with the relative humidity 30% and a temperature 23 °C for four hours to release moisture.

Friction is evaluated by measuring a dynamic coefficient of friction from a load when the sheet is slid while being put with a weight of 330g on a metal plate placed thereon. This measurement is carried out under the two conditions in which the metal plate is dry and is moisture.

Hardness is evaluated by measuring the sheets, multiply layered to be the thickness 15mm, with a JIS-A type hardness meter.

Touch-feeling (feel) is evaluated with the following criterion based on the feel when a hand touches the surface of the sheet. The evaluation is carried out by ten persons and an average of the ten results is taken.

Five-point grade: excellent and smooth feel. Four-point grade: good and smooth feel. Three-point grade: standard. Two-point grade: bad and sticky feel. One-point grade: worse and sticky feel.

Further, the sheets obtained in Comparison 1-11 are also evaluated in regard to moisture inhalation-exhalation, friction, hardness, and touch-feeling (feel). The results are shown in the following Table 2.

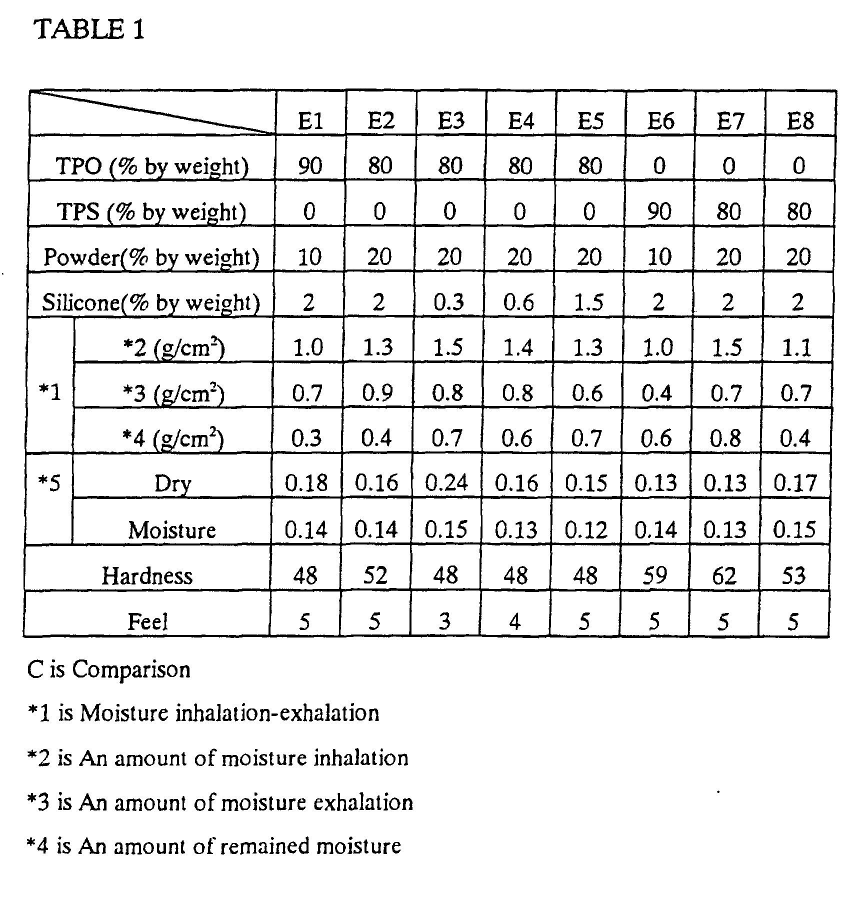

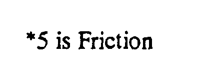

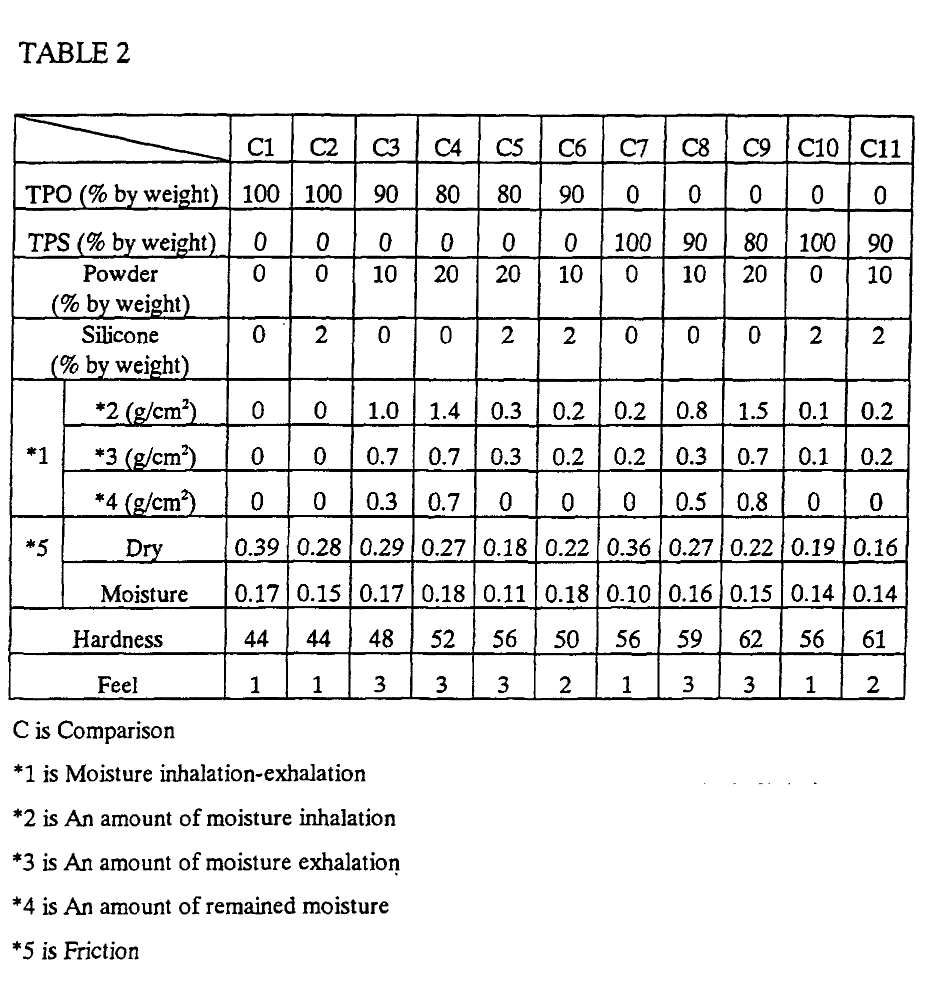

It is understood from Table 1 that the sheets obtained in Experiments 1-8 are satisfactory in all respects of moisture inhalation-exhalation, friction, hardness and touch-feeling since the sheets is composed of the resin composition containing the olefin thermoplastic elastomer or the styrene thermoplastic elastomer, the natural organic fine powder and silicone.

It is, however, understood from Table 2 that the sheet obtained in Comparison. 1 is inferior in respects of moisture inhalation-exhalation, friction in dry and touch-feeling, since the sheet consists of the olefin thermoplastic elastomer element not containing the natural organic fine powder or silicone.

The sheet obtained in Comparison 2 contains the olefin thermoplastic elastomer and silicone, but does not contain the natural organic fine powder, thus being inferior in the respects of moisture inhalation-exhalation and touch-feeling.

The sheets obtained in Comparisons 3 and 4 contain the olefin thermoplastic elastomer and the natural organic fine powder, but do not contain silicone, thus being inferior in the respect of friction in dry.

The sheets obtained in Comparisons 5 and 6 contain the olefin thermoplastic elastomer and silicone, and inorganic fine powder instead of the natural organic fine powder, thus being inferior in respect of moisture inhalation-exhalation. Incidentally, the sheet of Comparison 6 is also inferior in respect to touch-feeling.

The sheet obtained in Comparison 7 consists of the styrene thermoplastic elastomer element not containing the natural organic fine powder or silicone, thus being inferior in the respects of moisture inhalation-exhalation, friction in dry and touch-feeling.

The sheets obtained in Comparisons 8 and 9 contain the styrene thermoplastic elastomer and the natural organic fine powder but do not contain silicone, thus having friction inferior to the sheet containing silicone (Experiments 6 and 7).

The sheet obtained in Comparison 10 contains the styrene thermoplastic elastomer and silicone, but do not contains the natural organic fine powder, thus being inferior in the respects of moisture inhalation-exhalation and touch-feeling.

The sheet obtained in Comparison 11 contains the styrene thermoplastic elastomer and silicone, and the inorganic fine powder instead of the natural organic fine powder, thus being inferior in the respects of moisture inhalation-exhalation and touch-feeling.

## Claims

1. A resin composition, comprising;
a thermoplastic elastomer;
a natural organic material; and
a silicone **characterised in that**
said natural organic material is selected from silk, cellulose, collagen, wool, keratin, hemp, cotton, chitin, chitosan, betaine, and egg shell membrane, and mixtures thereof;
said natural organic material has a particle size of less than 300µm; and the content of said silicone is 0.3 wt% to 10 wt %.

2. The resin composition according to claim 1, wherein said olefin thermoplastic elastomer.

3. The resin composition according to claim 2, wherein said olefin thermoplastic elastomer is an ethylene-propylene copolymer or an ethylene-propylene-diene copolymer.

4. The resin composition according to claim 1, wherein said thermoplastic elastomer is a styrene thermoplastic elastomer.

5. The resin composition according to claim 4, wherein said styrene thermoplastic elastomer is a styrene-butadiene copolymer or a styrene-ethylene-butadiene copolymer.

6. The resin composition according to any preceding claim, wherein the content of said natural organic material is 5wt% to 30wt%.

7. A molding comprising a composition as defined in any preceding claim.

## Patentansprüche

1. Harzzusammensetzung, welche enthält:
ein thermoplastisches Elastomer;
ein natürliches organisches Material; und
ein Silikon, **dadurch gekennzeichnet, daß** das natürliche organische Material ausgewählt wird aus Seide, Zellulose, Kollagen, Wolle, Keratin, Hanf, Baumwolle, Chitin, Chitosan, Betain und Eierschalenmembran sowie Mischungen hiervon,
wobei das natürliche organische Material eine Teilchengröße von weniger als 300 µm aufweist, und wobei der Gehalt des Silikons zwischen 0,3 Gewichts-% bis 10 Gewichts-% beträgt.

2. Harzzusammensetzung nach Anspruch 1, wobei das thermoplastische Elastomer ein thermoplastisches Olefinelastomer ist.

3. Harzzusammensetzung nach Anspruch 2, wobei das thermoplastische Olefinelastomer ein Ethylen-Propylen-Copolymer oder ein Ehylen-Propylen-Dien-Copolymer ist.

4. Harzzusammensetzung nach Anspruch 1, wobei das thermoplastische Elastomer ein thermoplastisches Styrolelastomer ist.

5. Harzzusammensetzung nach Anspruch 4, wobei das thermoplastische Styrolelastomer ein Styrol-Butadien-Copolymer oder ein Styrol-Ethylen-Butadien-Copolymer ist.

6. Harzzusammensetzung nach einem der vorstehenden Ansprüche, wobei der Gehalt des natürlichen organischen Materials 5 Gewichts-% bis 30 Gewichts-% beträgt.

7. Eine Formmasse, welche eine Zusammensetzung nach einem der vorstehenden Ansprüche enthält.

## Revendications

1. Composition de résine comprenant:
un élastomère thermoplastique;
une matière organique naturelle; et
un silicone, **caractérisée en ce que** ladite matière organique naturelle est choisie parmi la soie, la cellulose, le collagène, la laine, la kératine, le chanvre, le coton, la chitine, le chitosane, la bétaïne, et la membrane de coquille d'oeuf, et des mélanges de ceux-ci;
ladite matière organique naturelle présente une taille de particules inférieure à 300 µm; et la teneur en ledit silicone est de 0,3% en poids à 10% en poids.

2. Composition de résine selon la revendication 1, dans laquelle l'élastomère thermoplastique est un élastomère thermoplastique oléfinique.

3. Composition de résine selon la revendication 2, dans laquelle l'élastomère thermoplastique oléfinique est un copolymère d'éthylène-propylène ou un copolymère d'éthylène-propylène-diène.

4. Composition de résine selon la revendication 1, dans laquelle ledit élastomère thermoplastique est un élastomère thermoplastique de styrène.

5. Composition de résine selon la revendication 4, dans laquelle l'élastomère thermoplastique de styrène est un copolymère de styrène-butadiène ou un copolymère de styrène-éthylène-butadiène.

6. Composition de résine selon l'une quelconque des revendications précédentes, dans laquelle la teneur en ladite matière organique naturelle est de 5% en poids à 30% en poids.

7. Composition à mouler comprenant une composition telle que définie dans l'une quelconque des revendications précédentes.
